(19) Europäisches Patentamt

European Patent Office

Office européen des brevets

(11) **EP 1 003 015 A2**

(12) **EUROPEAN PATENT APPLICATION**

(43) Date of publication:
24.05.2000 Bulletin 2000/21

(51) Int. Cl.⁷: **G01C 21/20**

(21) Application number: **99119349.1**

(22) Date of filing: **28.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.09.1998 JP 27834298**

(71) Applicants:
• **Pioneer Corporation
Meguro-ku, Tokyo (JP)**

• **Increment P Corporation
Tokyo-to (JP)**

(72) Inventor:
**Takenaga, Takashi,
c/o Increment P Corporation
Tokyo 153-0064 (JP)**

(74) Representative: **Popp, Eugen, Dr.
MEISSNER, BOLTE & PARTNER
Postfach 86 06 24
81633 München (DE)**

(54) **Method for processing map information**

(57)    A latitude and a longitude of each of arbitrary two points (P1,P2) on a map shown on a display are specified based on map information, and a quadrilateral (L1,L2,L3,L4) having a line (P1,P2) between the two points as one of the diagonals thereof is formed.

# FIG.2

EP 1 003 015 A2

**Description**

BACKGROUND OF THE INVENTION

The present invention relates to a method for processing map information shown on a display.

Due to the recent development in digital technologies, there has been proposed various electronic devices wherein map information or aerial photographic information is shown on a display, thereby enabling the user to confirm a location.

It is preferable that a digital camera having a display in which a desired map and a present place can be indicated in the map. Furthermore, it is desirable that when a photograph is taken at the position, position data of the location is read out from the map shown on the display and recorded as well as the image data of the photograph.

In a conventional electronic device employing the map information, when an arbitrary point on the map shown on the display is instructed, the unit length on the map is converted into actual distance based on the scale of the map shown on the display. Hence the latitude and the longitude of the location is obtained.

However, in the conventional map information processing method, it is necessary for each electronic device to be constantly stored with scale information of the maps. In addition, the conversion rate of the number of dots on the display representing the unit length on the map varies at every map, so that the calculation for specifying the determined point on the map becomes complicated.

SUMMARY OF THE INVENTION

An object of the present invention is to provide a method for processing map information wherein the problems in the conventional method are resolved. Namely, in the present invention, any area on the map can be arbitrarily designated and an arbitrary point in the area can be easily specified regardless of the reduction scale of the map.

According to the present invention, there is provided a method of processing map information stored in a database, comprising the steps of instructing a latitude and a longitude of each of arbitrary two points on a map shown on a display based on the map information, forming a quadrilateral having a line between the two points as one of the diagonals thereof in the map on the display, storing data on the quadrilateral in a memory.

The present invention further provides a method of processing map information stored in a database, comprising the steps of instructing a latitude and a longitude of each of arbitrary three points on a map shown on a display based on the map information, forming a quadrilateral having a line between one of the points of the three points, which has the minimum latitude, and another point having the maximum latitude or a line between one of the points, which has the minimum longitude, and another point having the maximum longitude as one of the diagonals thereof, storing data on the quadrilateral in a memory.

The present invention still further provides a method of processing map information stored in a database, comprising the steps of instructing a latitude and a longitude of each of arbitrary first and second points on a map shown on a display based on the map information, drawing a first line connecting two points and extending from the second point, drawing a second line intersecting the first line at the second point, forming a quadrilateral having a corner at the first point and diagonals of the first and second lines.

These and other objects and features of the present invention will become more apparent from the following detailed description with reference to the accompanying drawings.

BRIEF DESCRIPTION OF DRAWINGS

Fig. 1 is a schematic block diagram showing a system for storing map information read out from a database in accordance with the present invention;
Fig. 2 is a diagram explaining a method for designating an area in the map information;
Fig. 3 is an illustration showing a display of a digital camera showing the cut out map;
Fig. 4 is a diagram explaining another method for specifying a location of a point designated on the cut out map;
Fig. 5 is a diagram explaining another method for specifying a location of a point designated on the cut out map; and
Figs. 6 to 8 are diagrams explaining other methods for designating an area in the map information.

DETAILED DESCRIPTION OF THE PREFERRED EMBODIMENT

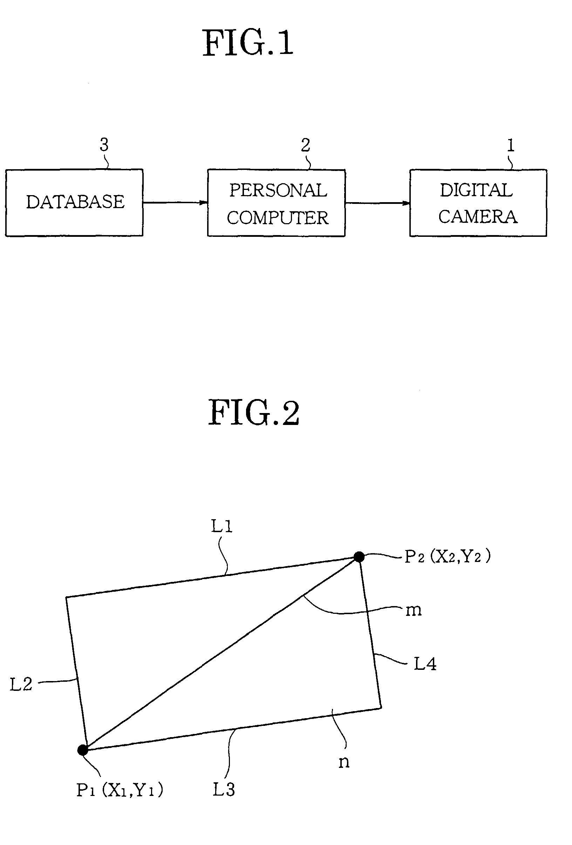

The first embodiment of the present invention will be described hereinafter with reference to Figs. 1 to 4.

Referring to Fig. 1, a digital camera 1 is connected by way of a personal computer 2 to a database 3 in which map information is stored. The map information of a desired area designated by a user of the camera is read out from the database 3 and stored in the digital camera 1. The database 3 is for example, a recorded medium such as a CD-ROM storing the map information, or a map server which is connected to the personal computer 2 through the Internet.

The operation for cutting out an area desired by the user is described.

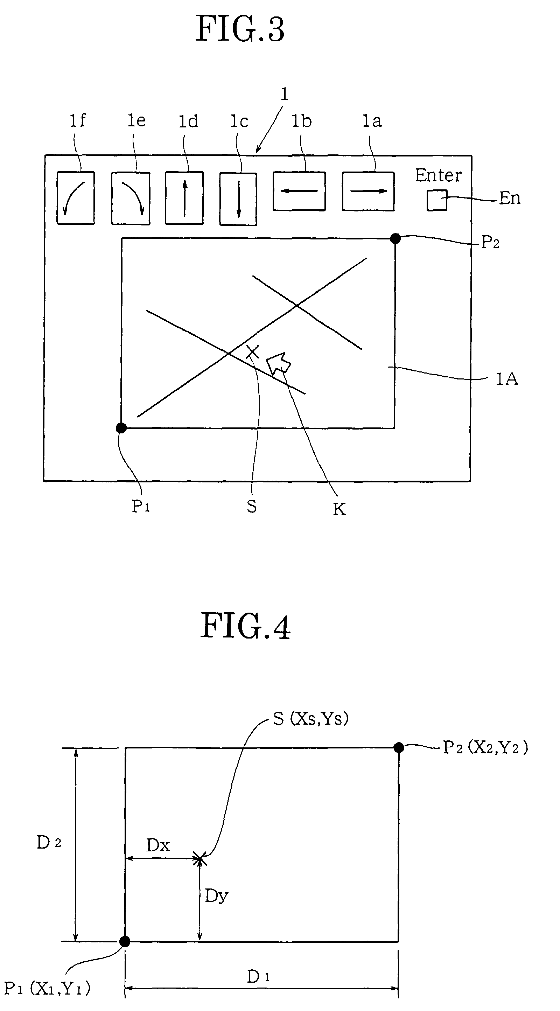

The map information is read out by the personal computer 2 from the database 3, and shown on a display 1A (Fig. 3) of the digital camera 1. The user then designates two points P1 and P2 by setting latitudes and longitudes thereof. The coordinates of the two points P1 and P2 are expressed as P1(X1, Y1) and P2(X2, Y2), respectively, as shown in Fig. 2. Thereafter, a rectangular area (quadrilateral) n having a line m connecting the two points p1 and p2 as one of the diagonals is determined and stored in a memory of the digital camera 1. When designating the two points on the map read out from the database, the user need only to designate the point P1 positioned at the minimum latitude X1 and minimum longitude Y1 of the desired area, and the point P2 positioned at the maximum latitude x2 and maximum longitude Y2.

Four lines L1 to L4 of the rectangular area n are determined such that only one of the lines, in this case the line L1 is positioned at an upper most position in the display. Namely, the latitude of the line L1 is larger than those of the other lines. Hence the cutting out of the desired area can be easily carried out.

The operation for cutting out the map may be carried out on a display of the personal computer 2, and the cut out map may be thereafter applied to the digital camera 1.

The thus cut out map stored in the memory of the digital camera 1 is read out when taking a photograph, and displayed on the display 1A thereof as shown in Fig. 3. On the other hand, the north direction is displayed at an upper position in the display. By positioning the point P1(X1, Y1) at the lower left corner of the display 1A and the point P2(X2, Y2) at the upper right corner, the exact north of the map is always shown at the upper side of the display 1A.

In order to specify the present position where a photograph is to be taken on the map shown on the display 1A, scroll keys 1a to 1d are operated by the user to move a pointing cursor K across the map to a present position S and an enter key En is operated to input the position data.

The digital camera 1 may be provided with a Global Positioning System (GPS) so that the position of the camera 1 is automatically shown on the map on the display 1A.

The location where the photograph is to be taken is specified on the map on the display 1A as follows.

Namely, as shown in Fig. 4, the display 1A has a resolution in the x axis direction of D1 dots, and a resolution in the y axis direction of D2 dots. When the point S on the display has an x-coordinate of Dx dots and a y-coordinate of Dy dots, coordinates Xs and Ys representing the latitude and longitude of the point S of the location on the map having the point P1 (X1, Y1) as the origin is calculated as follows.

$$Xs = X1 + (X2 - X1) \times DX/D1$$

$$Ys = Y1 + (Y2 - Y1) \times Dy/D2$$

When a shutter release button of the digital camera 1 is depressed to input the image data of a photograph, the position data (Xs, Ys) obtained in accordance with the equations for calculating the latitude and the longitude are also stored in the memory thereof. The position data (Xs, Ys) are stored in the memory in accordance with an image file format called Exchangeable image file format (Exif) which stores the position data within the same file as the image data.

The position data (Xs, Ys) of the location point S may be designated after the photograph is taken instead of before, and stored in the file wherein the image data is stored.

The image data thus stored in the memory of the digital camera 1 is applied to the personal computer 2 to reproduce or modify the image or to add a caption to the photograph. More particularly, the image data may be directly read out by the personal computer and the photograph is shown on the display thereof, or all of the data stored in the digital camera 1 may be read out and stored on a disc of the computer and the data may be read out from the disc each time a photograph is shown on the display. When showing the photograph on the display of the personal computer 2, the same map as that shown on the display 1A of the digital camera at the time the photograph is taken is shown. In order to display the photograph on the display, the user positions a cursor at the location on the map and clicks. Alternatively, a geographical name of the location or the name of the facility is input to read out a desired image data from the memory of the digital camera 1 or the personal computer.

Thereafter, the personal computer searches the position data recorded in each file of the image data which are stored in the digital camera 1 or the disc. The image data in the file having the desired position data are retrieved and the photograph is shown on the display. By indicating the location of the photograph on the display or on the printed photograph dependent on the position data, the exact place in a tourist center where the photograph was taken, for example, can be immediately known.

Thus in accordance with the present invention, a desired area of the map retrieved from the database can be easily designated. The latitude and the longitude of a place designated on the map of the desired area are calculated using the number of dots indicating the resolution of the display as a parameter. Thus, the place can be easily specified regardless of the scale on which the map is shown on the display.

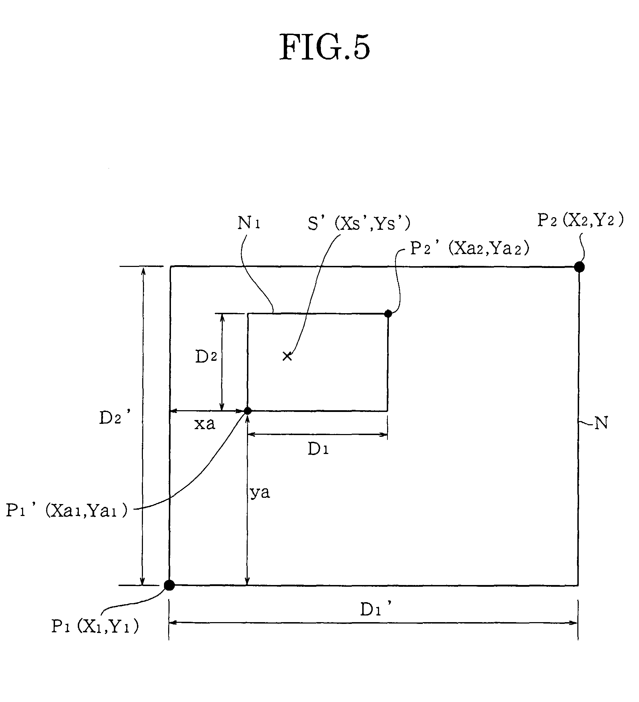

Fig. 5 explains a method for processing the map information when the size of a desired map to be cut out from the map which is fed from the database 3 and stored in the digital camera is larger than the size of the display 1A.

Referring to Fig. 5, the user designates the two points P1 (X1, Y1) and P2 (X2, Y2) on the map retrieved from the database 3 in the same manner as in Fig. 2. A rectangular area N having a line connecting the points P1 and P2 as a diagonal is defined. An area N1 shows a range in which the camera shows a map. The area N1 can be set by operating the scroll keys 1a to 1d shown in Fig. 3 to scroll the screen within the area N in the vertical and horizontal directions.

The user determines a position in the area N1 as in the example shown in Fig. 3. More particularly, the display 1A has a resolution in the x axis direction of D1 dots, and a resolution in the y axis direction of D2 dots as in Fig. 4. Based on the calculation dependent on the resolution of the display, the area N has D1' dots in the x axis direction and D2' dots in the Y axis direction.

The map is scrolled from the origin at the lower left corner of the area N, namely the point P1 (X1, Y1), to show the area N1 of the display 1A so that a point P1' (Xa1, Ya1) is at the lower left corner of the display. The map is scrolled a quantity of xa dots in the x axis direction and ya dots in the y axis direction. Hence, coordinates Xa1 and Ya1 representing the latitude and longitude of the point P1' on the map is calculated as follows.

$$Xa1 = X1 + (X2 - X1) \times xa/D1'$$

$$Ya1 = Y1 + (Y2 - Y1) \times ya/D2'$$

Coordinates Xa2 and Ya2 representing the latitude and longitude of a point P2' at the upper right corner of the map is calculated as follows.

$$Xa2 = X1 + (X2 - X1) \times (xa + D2)/D1'$$

$$Ya1 = Y1 + (Y2 - Y1) \times (ya + D2)/D2'$$

If a point S' of a location on the display 1A, the origin of which is the point P1'(Xa1,Ya1), has an x-coordinate of Dx' dots and a y-coordinate of Dy' dots, the coordinates Xs' and Ys' representing the latitude and longitude of the point S' is calculated as follows.

$$Xs' = Xa1 + (Xa2 - Xa1) \times DX'/D1$$

$$Ys' = Ya1 + (Ya2 - Ya1) \times Dy'/D2$$

When the shutter release button of the digital camera 1 is operated to input the image data for a photograph, the position data (Xs', Ys') obtained in accordance with the equations indicating the latitude and the longitude are also stored in the memory thereof.

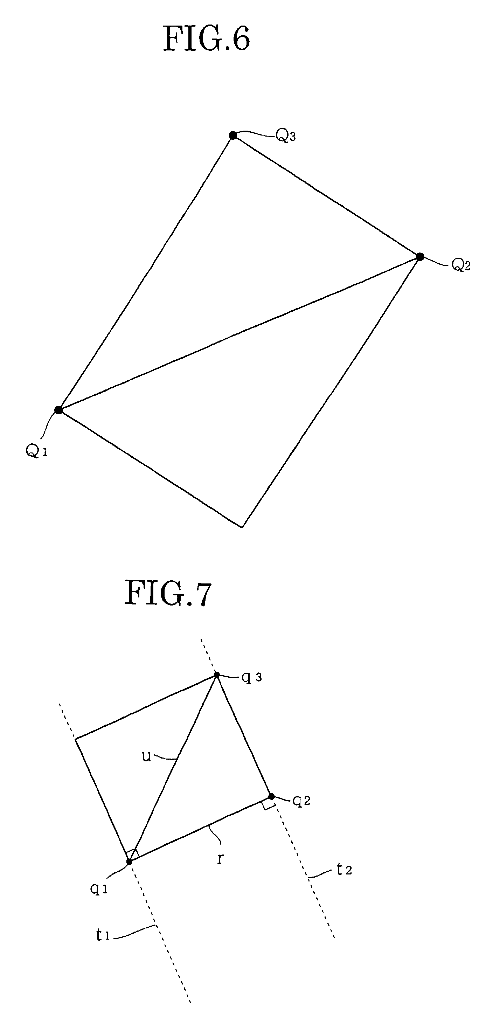

The map may be cut out by designating three arbitrary points instead of two as shown in Fig. 6. In the present embodiment, a line between a point Q1, which has the minimum longitude, and a point Q2, which has the maximum longitude, is set as one of the diagonals of the desired cut out area, and a point Q3 is set as one of the ends of the other diagonal, thereby defining a rectangular area.

The diagonal may be determined as a line between the designated points having the minimum and the maximum latitudes.

In the present example, the area of the cut out map shown on the display is more consistent with the desire of the user than in the example where only two points are designated.

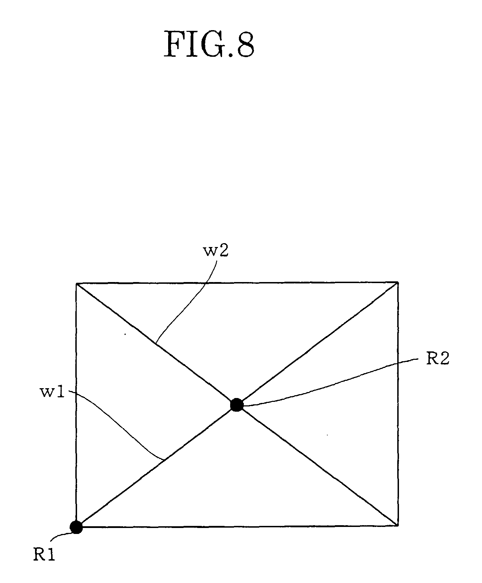

However, the designated area may not always be rectangular in shape depending on the manner in which the three points are designated. A method for cutting out a rectangular area is explained with reference to Fig. 7.

Referring to Fig. 7, first of all, points q1 and q2 are designated, and lines t1 and t2, each passing through the points q1 and q2 are drawn so that each line is perpendicular to a line r drawn between the two points q1, q2. A third point q3 is designated on one of the lines t1 and t2. In the example shown in Fig. 7, the point q3 is formed on the line t2. Thus there is formed a rectangular area where a line u between the points q1 and q3 is one of the diagonals, and the other point q2 is positioned at an end of the other diagonal.

When the rectangular area is shown on the display 1A, the exact north is always shown at the upper side of the display. The method for specifying the latitude and the longitude of the location set by the user on the map shown on the display is the same as those described with reference to Figs. 4 and 5.

Fig. 8 shows another embodiment wherein two points are designated when the area is cut out from the map. One of the points is set at the center of the desired area.

Referring to Fig. 8, when points R1 and R2 are arbitrarily designated on the map, a line w1 is drawn between the points. Another line w2 is so drawn to penetrate one of the points positioned adjacent the center of the desired area, in the case of Fig. 8, the point R2. The included angle between the lines w1 and w2 may be arbitrarily set dependent on the area of the map.

The lines w1 and w2 thus determined are set as the diagonals and the other point on the side of the border of the desired area, in the case of Fig. 8, the pint R1, is set as one of the corners. The designated area is cut out so as to be shown on the display. The area is shown on the display 1A so that the exact north is always shown at the upper side thereof. The method for specifying the latitude and the longitude of the location set by the user on the map shown on the display is the same as those described with reference to Figs. 4 and 5.

The cut out area in each of the above described embodiments may be rotated by operating rotation keys 1e and 1f shown in Fig. 3. In such a case, each of the coordinates of the four corners of the area are converted in accordance with the angle of the rotation. If a location in the area is designated after the area is rotated, the latitude and the longitude of the position are specified in accordance with the converted coordinates in the manner shown in Figs. 4 and 5.

The present present invention may be applied not only to the digital camera but also to displays for other devices for displaying map information and aerial photograph information such as personal digital assistants (PDA).

While the invention has been described in conjunction with preferred specific embodiment thereof, it will be understood that this description is intended to illustrate and not limit the scope of the invention, which is defined by the following claims.

## Claims

1. A method of processing map information stored in a database, comprising the steps of

   instructing a latitude and a longitude of each of arbitrary two points on a map shown on a display based on the map information;
   forming a quadrilateral having a line between the two points as one of the diagonals thereof in the map on the display;
   storing data on the quadrilateral in a memory.

2. The method according to claim 1 wherein only one of the four sides of the quadrilateral is positioned at a position higher than the other three sides in the display.

3. The method according to claim 1 wherein a latitude and a longitude of a position arbitrarily designated within the quadrilateral area are calculated based on a ratio between the number of dots between the two points shown on the display and the number of dots representing the coordinates of the designated position.

4. The method according to claim 3 wherein

   the display is a display provided in a digital camera on which the map within the quadrilateral area is shown, and the arbitrarily designated position is a location where a photograph is taken.

5. A method of processing map information stored in a database, comprising the steps of

   instructing a latitude and a longitude of each of arbitrary three points on a map shown on a display based on the map information;
   forming a quadrilateral having a line between one of the points of the three points, which has the minimum latitude, and another point having the maximum latitude or a line between one of the points, which has the minimum longitude, and another point having the maximum longitude as one of the diagonals thereof;
   storing data on the quadrilateral in a memory.

6. The method according to claim 5 comprising designating the two points, forming lines passing through each of the points perpendicular to a line between the two points, and designating the third point on one of the lines passing through the two points.

7. The method according to claim 5 wherein a latitude and a longitude of a position arbitrarily designated in the quadrilateral area are calculated based on a ratio between the number of dots between two of the three points shown on a display and the number of dots representing the coordinates of the designated position.

8. The method according to claim 7 wherein

   the display is a display provided in a digital camera, on which the map within the quadrilateral area is shown and the arbitrarily designated position is a location where a photograph is taken.

9. A method of processing map information stored in a database, comprising the steps of

   instructing a latitude and a longitude of each of arbitrary first and second points on a map shown on a display based on the map information;
   drawing a first line connecting two points and extending from the second point,
   drawing a second line intersecting the first line at the second point;
   forming a quadrilateral having a corner at the first point and diagonals of the first and second lines.

# FIG.1

DATABASE 3 → PERSONAL COMPUTER 2 → DIGITAL CAMERA 1

# FIG.2

L1

$P_2 (X_2, Y_2)$

m

L4

L2

n

$P_1 (X_1, Y_1)$   L3

# FIG.3

1f  1e  1d  1c  1  1b  1a

Enter

En

P₂

1A

P₁    S    K

# FIG.4

S (Xs,Ys)

P₂ (X₂,Y₂)

D₂

Dx

Dy

P₁ (X₁,Y₁)

D₁

# FIG.5

# FIG.6

# FIG.7

# FIG.8

w2

w1

R2

R1